# NEUE EUROPÄISCHE PATENTSCHRIFT

(11) **EP 2 304 261 B2**
(45) Veröffentlichungstag und Bekanntmachung des Hinweises auf die Entscheidung über den Einspruch: **29.11.2023**
(45) Hinweis auf die Patenterteilung: 09.03.2016
(21) Anmeldenummer: 09777399.8
(22) Anmeldetag: 23.07.2009
(51) Int. Cl.: F16D 55/22

(54) **VERFAHREN ZUM HERSTELLEN EINES BREMSSATTELS**
METHOD FOR PRODUCING A BRAKE CALIPER
PROCÉDÉ DE RÉALISATION D'UN ÉTRIER DE FREIN

(30) Priorität: 31.07.2008 DE 102008035753
(43) Veröffentlichungstag der Anmeldung: 06.04.2011
(73) Patentinhaber: ZF CV Systems Europe BV, 1170 Brussels (BE)
(72) Erfinder: STUMPF, Martin, 68623 Lampertheim (DE); KRÄMER, Peter, 68799 Reilingen (DE)
(74) Vertreter: Leinweber & Zimmermann
(86) Internationale Anmeldenummer: PCT/EP2009/005358
(87) Internationale Veröffentlichungsnummer: WO 2010/012414

(56) Entgegenhaltungen:
- EP-A- 1 233 202
- WO-A-03/036122
- WO-A1-2007/077206
- DE-A1-102007 001 960
- DE-B4-102005 006 264
- DE-C2- 19 515 063
- JP-A- 58 040 214
- JP-A- 2004 353 850

## Beschreibung

Die Erfindung betrifft ein Verfahren zum Herstellen einer Sattelscheibenbremse, insbesondere für Nutzfahrzeuge.

Ein Verfahren der oben genannten Art ist bekannt, beispielsweise aus der DE 195 15 063 C2. Dabei wird ein Bearbeitungswerkzeug zum Ausbilden der Abstützfläche durch eine eigens dafür vorgesehene Arbeitsöffnung in das Innere des Sattels eingeführt. Vergleichbare Herstellungsverfahren sind bekannt aus der EP 1 881 472 A1, aus der DE 10 2005 054 402 B4 sowie aus der DE 10 2007 001 960 A1, die ein Verfahren gemäß dem Oberbergriff der Ansprüche 1 und 2 offenbart, und die sich auf dieselbe Bremse bezieht wie die DE 10 2007 041 658 A1. Das Ausbilden der Arbeitsöffnung zum Einführen des Bearbeitungswerkzeugs resultiert in einer Schwächung des Bremssattels. Darüber hinaus bedarf es zusätzlicher Maßnahmen, um die Arbeitsöffnung nach der Bearbeitung zu verschließen, wobei der Verschluß auch dicht sein muß.

Einen anderen Weg gehen die Lösungen nach der EP 1 160 480 A2 und der US 6,811,004 B1. Hier wird die Abstützfläche an einem separaten Bauteil ausgebildet, das erst nach der abschließenden Bearbeitung in das Sattelinnere eingebracht und in einer großflächigen Öffnung am Sattelende verankert wird. Auch diese Lösung ist aufwendig und bereitet Abdichtprobleme.

Die JP2004-353850 A1 zeigt die Ausbildung einer Axialnut zur Drehsicherung mittels eines Fräsers.

Schließlich zeigen die WO 03/023244 A1 und die DE 698 24 731 T2 Lösungen, bei denen der Sattel geteilt ist, der zuspannseitige Sattelabschnitt mithin nicht einstückig mit dem felgenseitigen Sattelabschnitt ausgebildet ist. Dabei werden zum Ausbilden der Abstützfläche die beiden Sattelabschnitte voneinander getrennt, um die Zugänglichkeit zu gewährleisten. Bei dieser Lösung sind die Verbindungselemente zum Koppeln der beiden Sattelabschnitte miteinander im Betrieb erheblichen Belastungen ausgesetzt.

Demgegenüber bezieht sich die Erfindung auf eine Bremse mit einem einstückig ausgebildeten geschlossenen Sattel, dessen Inneres nur sehr schwer zugänglich ist.

Der Erfindung liegt die Aufgabe zugrunde, das Herstellungsverfahren nach der DE 195 15 063 C2 derart weiterzubilden, daß der Aufwand verringert ist, der Sattel nicht geschwächt ist und keine zusätzlichen Verbindungselemente erforderlich sind, die im Betrieb starken Belastungen ausgesetzt sind.

Erfindungsgemäß wird die gestellte Aufgabe durch das Herstellungsverfahren nach Anspruch 1 oder Anspruch 2 gelöst.

Der Erfindung liegt dabei die Erkenntnis zugrunde, daß bei Verwendung der Ausnehmung, in die in eingebautem Zustand die Bremsscheibe hineinragt, um das Bearbeitungswerkzeug zum Ausbilden der Abstützfläche einzuführen, auch bei einem einstückig ausgebildeten Sattel eine zusätzliche Arbeitsöffnung nicht erforderlich ist und auch die Abstützfläche nicht außerhalb des Sattels ausgebildet werden muß.

Nach der Erfindung kann das Bearbeitungswerkzeug auch durch die Montage-/ Demontageöffnung für den Bremsbelag in das Sattelinnere eingeführt werden, um die Abstützfläche auszubilden.

Die Abstützfläche ist nach einer besonders bevorzugten Ausführungsform der Erfindung zumindest abschnittweise eben.

Zusätzlich oder alternativ kann aber auch vorgesehen sein, daß die Abstützfläche zumindest-abschnittweise die Form einer Rinne hat.

Weiter bevorzugt hat die Rinne eine bogenförmige, insbesondere eine kreisbogenförmige Kontur.

Die Gestaltung der Abstützfläche hängt jeweils von den übrigen Gegebenheiten in der Bremse ab, insbesondere von der üblicherweise im Sattelinneren angeordneten Zuspanneinrichtung.

Nach der Erfindung weist das Bearbeitungswerkzeug eine L-förmige Halterung auf und ist zum Verfahren in eine Arbeitsstellung translatorisch sowie rotatorisch um eine Achse in Richtung der Längserstreckung eines der Schenkel des "L" bezüglich des Sattels verstellbar.

Wenn hier von Bewegungen bezüglich des Sattels die Rede ist, so können diese Bewegungen zum einen dadurch hervorgerufen werden, daß das Bearbeitungswerkzeug bewegt wird. Zusätzlich oder alternativ kann aber auch der Sattel bezüglich des Werkzeugs komplementäre Bewegungen ausführen. Selbstverständlich deckt die Erfindung auch Lösungen ab, bei denen sowohl das Bearbeitungswerkzeug als auch der Sattel bewegt bzw. verstellt werden. Das gilt auch für im folgenden beschriebene Bewegungen / Verstellungen.

Erfindungsgemäß weiter bevorzugt ist vorgesehen, daß
in einem ersten Schritt der Schenkel des "L" mit dem Bearbeitungswerkzeug in die erste oder die zweite Ausnehmung gefahren wird, und zwar mit seiner Längsachse parallel zu der Hauptebene einer in eingebautem Zustand in die erste Ausnehmung hineinragenden Bremsscheibe,
in einem zweiten Schritt die Halterung um eine Achse in Richtung der Längserstrekkung des anderen Schenkels des "L" gedreht wird, so daß das Bearbeitungswerkzeug dem zuspannseitigen Sattelabschnitt zugewandt ist,
in einem dritten Schritt das Bearbeitungswerkzeug auf den zuspannseitigen Sattelabschnitt zu bewegt wird und
in einem vierten Schritt die Abstützfläche ausgebildet wird.

Mit anderen Worten wird das Bearbeitungswerkzeug angesichts der gegebenen Geometrie zunächst mit seitlicher Ausrichtung in die erste oder die zweite Ausnehmung und damit in das Sattelinnere eingebracht und erst dann in eine für die Bearbeitung der Abstützfläche geeignete Ausrichtung gedreht und zu der auszubildenden Abstützfläche hin gebracht. Dadurch wird der Schwierigkeit Rechnung getragen, daß die "Breite" der ersten und der zweiten Ausnehmung in aller Regel kleiner ist als die "Länge" des Schenkels des "L" mit dem Bearbeitungswerkzeug.

Nach dieser Ausgestaltung wird das Problem, daß die Länge des Schenkels des "L" mit dem Bearbeitungswerkzeug größer als die Breite der ersten und der zweiten Ausnehmung ist, dadurch gelöst, daß das Bearbeitungwerkzeug "schräg" durch die erste oder zweite Ausnehmung in das Innere des Sattels eingeführt wird.

Nach der Erfindung kann der Anstellwinkel 30° bis 80° betragen, bevorzugt 40° bis 70°, weiter bevorzugt 50° bis 60°.

Die genaue Festlegung des Anstellwinkels ist dabei selbstverständlich von den jeweiligen geometrischen Gegebenheiten abhängig.

Das erfindungsgemäße Verfahren deckt auch eine Version ab, bei der der zuspannseitige Sattelabschnitt mindestens eine Führungsfläche zum Halten und/oder Führen eines Bremsbelages, eines Druckstücks, mindestens einer Druckspindeleinrichtung und/oder mindestens einer Druckstempeleinrichtung in Radial- und/oder Umfangsrichtungen der Bremse aufweist, wobei vorgesehen ist, daß zum Ausbilden der Führungsfläche ein Bearbeitungswerkzeug durch die erste oder die zweite Ausnehm ung in denjenigen Bereich verbracht wird, in dem die Führungsfläche ausgebildet werden soll.

Mit anderen Worten kann nach der Erfindung nicht nur vorgesehen sein, die Abstützfläche mit einem Bearbeitungswerkzeug auszubilden, das durch die erste oder die zweite Ausnehmung in das Sattelinnere eingeführt wird, sondern es gilt das gleiche auch für die Ausbildung einer Führungsfläche.

Im folgenden ist die Erfindung anhand bevorzugter Ausführungsbeispiele unter Bezugnahme auf die beiliegende Zeichnung mit weiteren Einzelheiten näher erläutert. Dabei zeigen
- Figur 1: eine perspektivische Ansicht eines bevorzugten Ausführungsbeispiels des erfindungsgemäßen Bremssattels, von der Felgenseite her gesehen,
- Figur 2: die gleiche Ansicht wie Figur 1, jedoch von der Zuspannseite her gesehen,
- Figur 3: eine perspektivische Querschnittansicht auf den zuspannseitigen Abschnitt des Sattels,
- Figur 4: eine perspektivische Längsschnittansicht des Sattels,
- Figur 5: eine perspektivische Ansicht des Sattels von radial innen mit einem Bearbeitungswerkzeug,
- Figur 6: die gleiche Ansicht wie Figur 5, jedoch mit dem Bearbeitungswerkzeug in einer fortgeschrittenen Position,
- Figur 7: die gleiche Ansicht wie Figur 6, jedoch mit dem Bearbeitungswerkzeug in einer noch weiter fortgeschrittenen Position,
- Figur 8: eine perspektivische Längsschnittansicht mit dem Bearbeitungswerkzeug in einer Arbeitsstellung,
- die Figuren 9(a) bis (f): schematische Schnittansichten zur Erläuterung eines alternativen Herstellungsverfahrens.

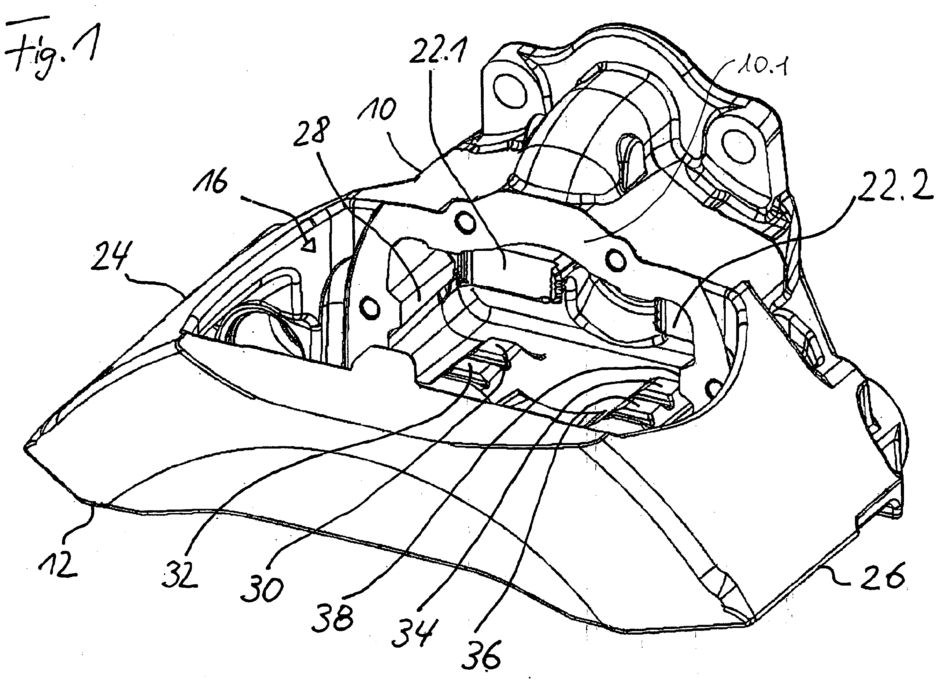

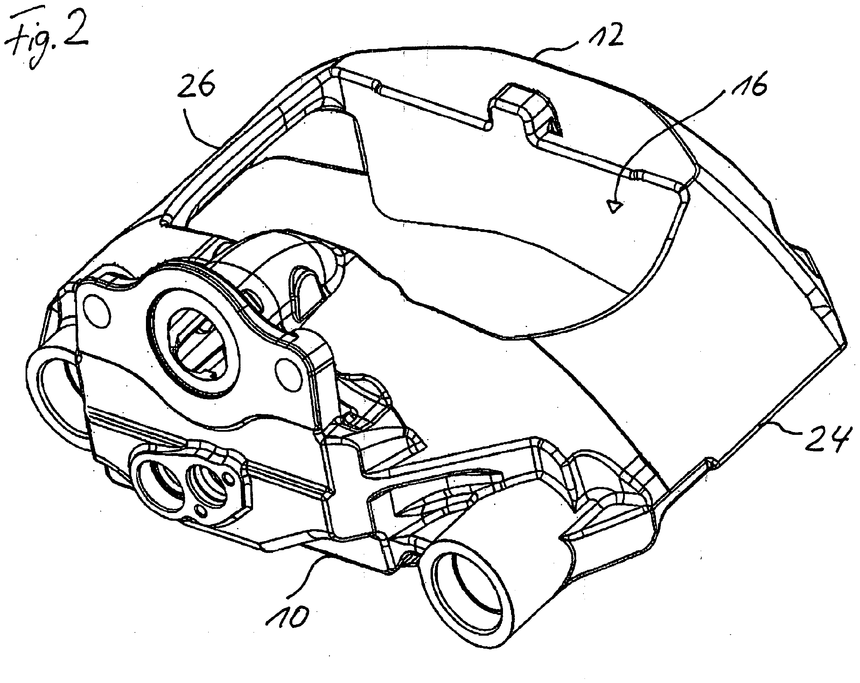

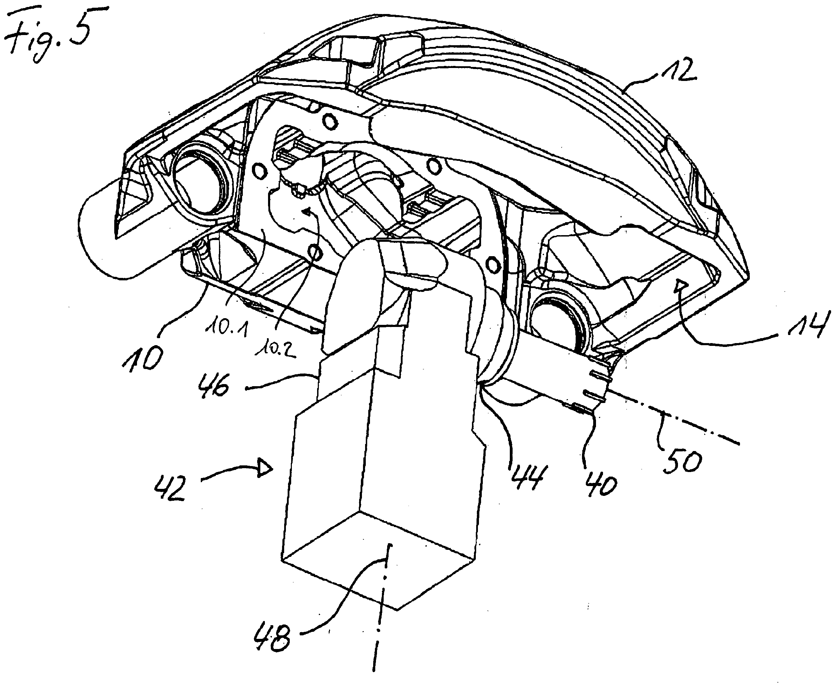

Der in den Figuren 1 bis 8 dargestellte Bremssattel weist einen zuspannseitigen Sattelabschnitt 10 und einen felgenseitigen Sattelabschnitt 12 auf. Der felgenseitige Sattelabschnitt ist (weitestgehend) geschlossen, was zur stabilen Ausbildung beiträgt. Zwischen den beiden Sattelabschnitten 10 und 12 liegt eine erste nach radial innen offene Ausnehmung 14, vgl. insbesondere Figur 5. Ferner liegt zwischen den Sattelabschnitten 10 und 12 eine nach radial außen offene zweite Ausnehmung 16, vgl. Figur 1. In eingebautem Zustand ragt eine (in der Zeichnung nicht gezeigte) Bremsscheibe in die erste Ausnehmung 14 hinein, so daß ein Teil der Bremsscheibe zwischen den beiden Sattelabschnitten 10 und 12 liegt. Die zweite Ausnehmung 16 dient zum Montieren / Demontieren von Bremsbelägen (ebenfalls in der Zeichnung nicht gezeigt).

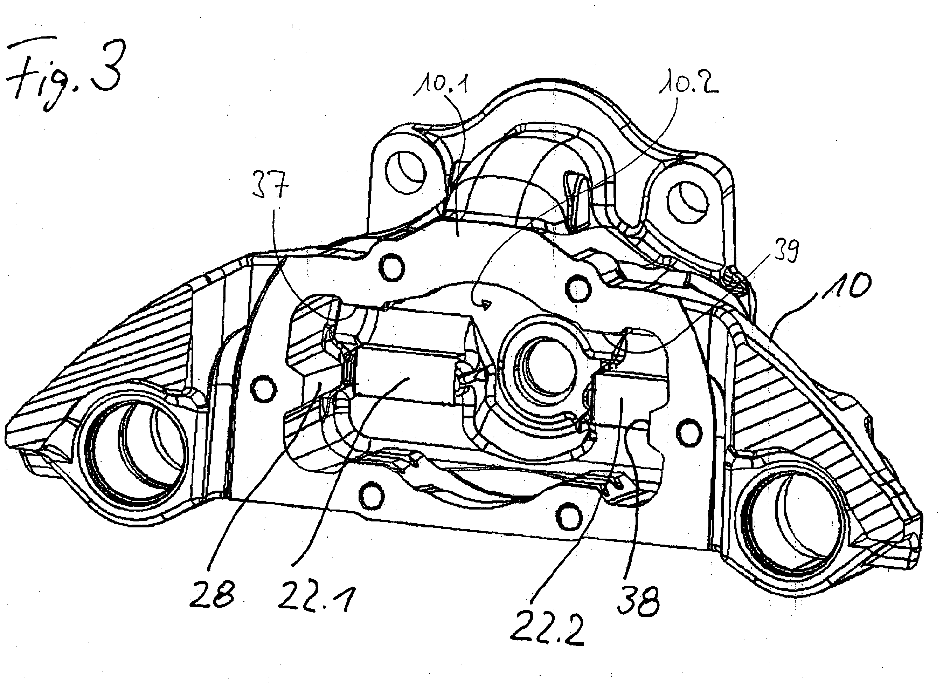

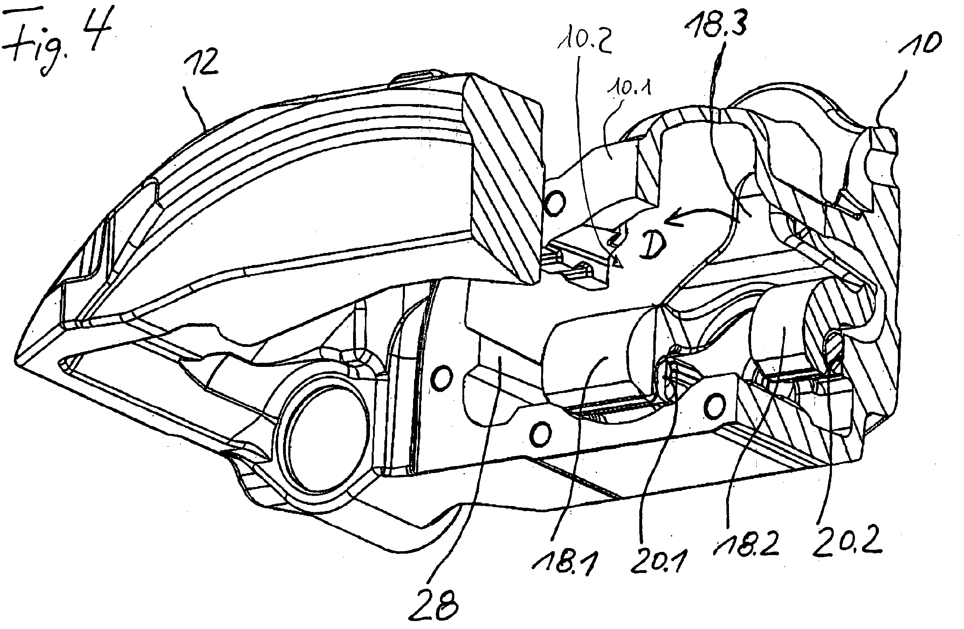

In Figur 4 ist eine im Inneren des Bremssattels 10, 12 angeordnete Zuspannwelle 18.1, 18.2 gezeigt, die sich über Lager 20.1, 20.2 an Abstützflächen 22.1, 22.2 (vgl. Figuren 1 und 3) abstützt, und beim Verschwenken in Drehrichtung D davor gelagerte Zuspannteile, wie beispielsweise einen Bremsbelag, gegen die Bremsscheibe preßt. Die Zuspannwelle 18.1, 18.2 mit einem Drehhebel 18.3 ist Teil einer im Bremssattel 10, 12 angeordneten, aber nicht näher dargestellten Zuspanneinrichtung, wie sie bei Nutzfahrzeugscheibenbremsen verwendet wird. Auch der Drehhebel 18.3 liegt bei dieser Ausführung bevorzugt im Inneren des Bremssattels 10, 12.

Die beiden Sattelabschnitte 10 und 12 sind einstückig miteinander ausgebildet. Sie sind über Stege 24, 26 miteinander verbunden, die in eingebautem Zustand die Bremsscheibe übergreifen.

Im Inneren des Sattels bzw. an dem zuspannseitigen Sattelabschnitt 10 sind gemäß Figur 1 Führungsflächen 28, 30, 32, 34, 36, 37, 38, 39 zum Halten und/oder Führen eines Druckstücks und/oder des zuspannseitigen Bremsbelages in Radial- bzw. Umfangsrichtung der Bremsscheibe vorgesehen. Zusätzlich zu den gezeigten Führungsflächen können auch weitere Führungsflächen ausgebildet sein, die weiteren Zwecken dienen, nämlich beispielsweise dem Halten und/oder Führen einer Druckspindeleinrichtung und/oder einer Druckstempeleinrichtung. Bei der Ausführung/Lage und der Anzahl der Führungsflächen ist die Ausführung der Zuspanneinrichtung entscheidend.

Eine Flanschfläche 10.1 des zuspannseitigen Sattelschenkels 10, an der ein Verschlußrahmen angebracht werden kann, umläuft eine Axialöffnung 10.2, über die die Abstützflächen 22.1 und 22.2 zugänglich sind. Die Axialöffnung 10.2 dient auch dem späteren Einbringen der vorab erwähnten Teile der Zuspanneinrichtung.

Im folgenden ist ein erstes Beispiel eines Verfahrens zum Ausbilden der Abstützflächen 22.1 und 22.2 beschrieben:

Gemäß Figur 5 wird ein Bearbeitungswerkzeug 40 in Form eines Stirnfräsers mit einer L-förmigen Halterung 42 von radial innen her durch die erste Ausnehmung 14 in das Sattelinnere eingeführt. Dabei steht ein Schenkel 44 des "L", der das Bearbeitungswerkzeug 40 trägt, parallel zu einer Hauptebene der Bremsscheibe in eingebautem Zustand. Das Einführen in die erste Ausnehmung ist in dieser Stellung möglich, weil der Schenkel 44 des "L" kürzer als die Länge der ersten Ausnehmung ist. In 90° dazu gedrehter Stellung würde der Schenkel 44 nicht in die erste Ausnehmung 14 passen, weil seine Länge größer als die Breite der ersten Ausnehmung 14 ist.

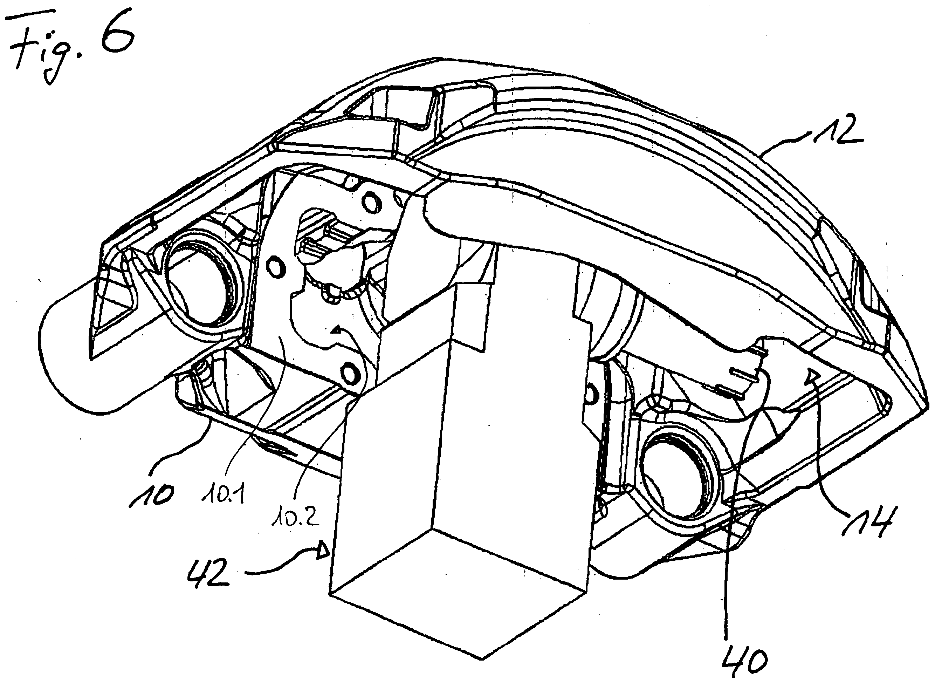

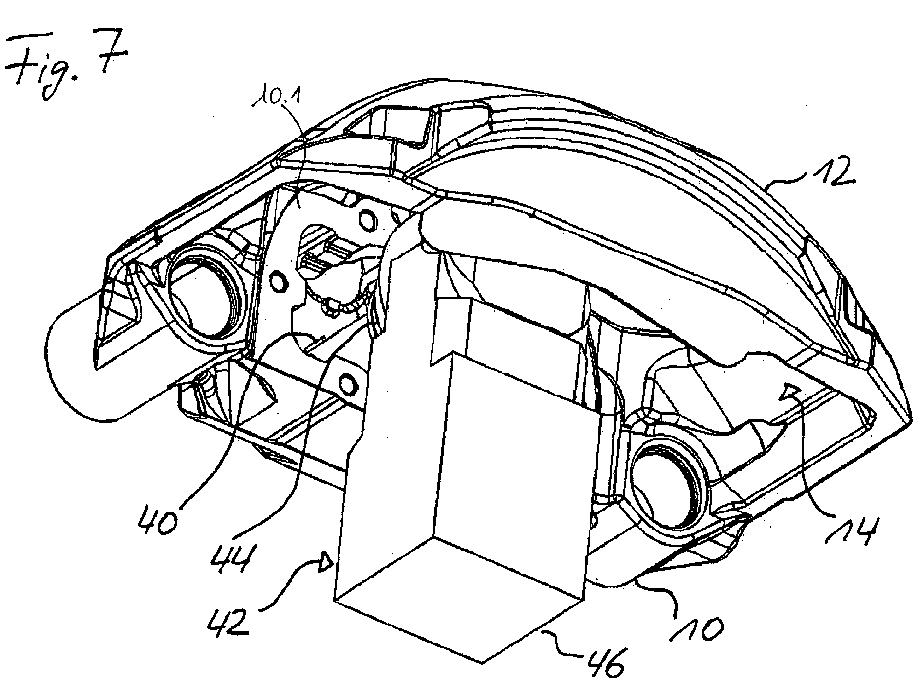

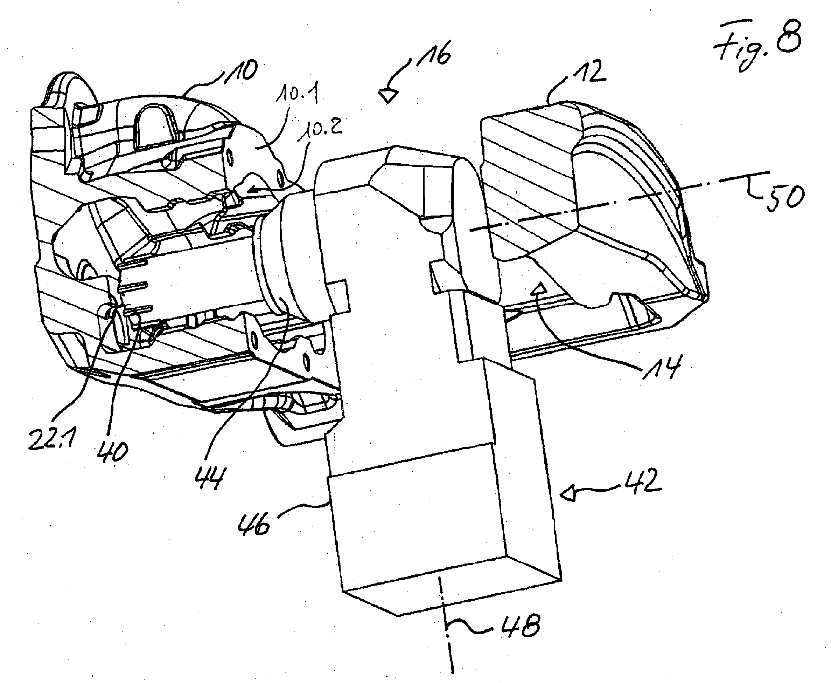

Nachdem also das Bearbeitungswerkzeug 40 in Figur 5 nach oben und damit in den Innenraum des Sattels eingefahren worden ist und mithin die Stellung nach Figur 6 eingenommen hat, erfolgt eine Drehung um die Längsachse 48 des Schenkels 46, so daß der Schenkel 44 gemäß Figur 7 auf die Abstützflächen 22.1 und 22.2 zu gerichtet ist. Wie insbesondere Figur 8 zu entnehmen ist, kann in dieser Stellung die Ausbildung der Abstützflächen 22.1 und 22.2 unter Verwendung des als Bearbeitungswerkzeug 40 vorgesehenen Stirnfräsers erfolgen. Das Bearbeitungswerkzeug 40 läuft zur Bearbeitung die jeweils zu bearbeitende Fläche entlang. Es sei angemerkt, daß selbstverständlich alle Abstützflächen auch durchgängig oder auch als weitere Teilflächen ausgebildet sein können.

Bei dem gezeigten Ausführungsbeispiel sind die Führungsflächen 22.1 und 22.2 eben. Unter Verwendung beispielsweise eines Kugelkopffräsers als Bearbeitungswerkzeug können die genannten Abstützflächen auch nach Art einer Rinne mit kreisbogenförmiger Kontur ausgebildet werden.

Nach Ausbildung der Abstützflächen 22.1 und 22.2 wird das Bearbeitungswerkzeug 40 wieder aus dem Inneren des Sattels herausgefahren. Dabei erfolgen die oben beschriebenen Bewegungen in umgekehrter Reihenfolge.

Die Längsachse des Schenkels 44 ist mit der Bezugszahl 50 bezeichnet, vgl. Figur 8.

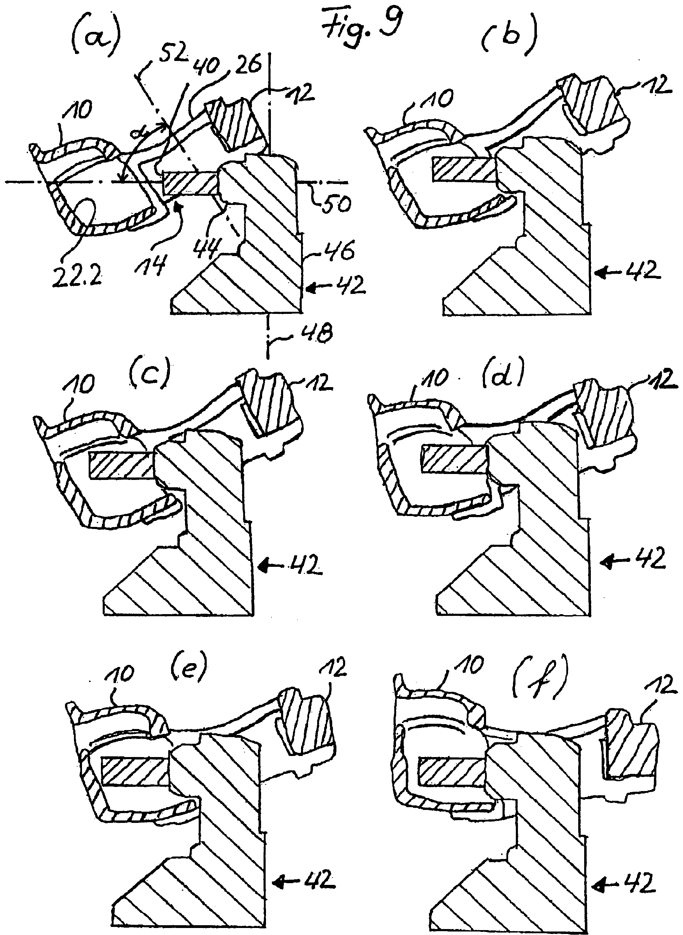

Im folgenden ist ein zweites Beispiel eines Verfahrens zum Ausbilden der Abstützflächen 22.1 und 22.2 unter Bezugnahme auf die Figur 9 beschrieben.

Das Bearbeitungswerkzeug 40 mit dem L-förmigen Halter 42 wird anders als nach dem ersten Beispiel in einer Stellung in die erste Ausnehmung 14 eingeführt, in der die Längsachse 50 des Schenkels 44 mit dem Bearbeitungswerkzeug 40 schräg bezüglich der Hauptebene 52 der (nicht gezeigten) Bremsscheibe angestellt ist. In dem beschriebenen Ausführungsbeispiel beträgt der Anstellwinkel α ca. 55°, vgl. Figur 9 (a).

Gemäß Figur 9 (b) wird das Werkzeug 40 danach translatorisch in den Innenraum des Sattels hineingefahren. Danach erfolgt gemäß Figur 9 (c) ein Verschwenken der Halterung 42 mit dem Bearbeitungswerkzeug 40 bezüglich des Sattels um eine auf den beiden Längsachsen 48 und 50 senkrecht stehende Achse. Dazu kann die Halterung 42 mit dem Bearbeitungswerkzeug 40 bezüglich des Sattels verschwenkt werden. Es kann aber auch der Sattel bezüglich der vorgenannten Elemente verschwenkt werden. Es können auch beide gleichzeitig verschwenkt werden.

Figur 9 (d) zeigt einen Zustand, in dem gegenüber der Figur 9 (c) noch weiter verschwenkt worden ist.

Wie der Figur 9 (e) zu entnehmen ist, wird daraufhin die Halterung 42 mit dem Bearbeitungswerkzeug 40 in der Zeichnung nach links, d.h. weiter in den Innenraum des Sattels hinein verschoben.

Figur 9 (f) zeigt die Arbeitsstellung, in der mit dem Bearbeitungswerkzeug 40 die Abstützflächen 22.1 und 22.2 ausgebildet werden.

Das Herausfahren der Halterung 42 mit dem Bearbeitungswerkzeug 40 erfolgt in umgekehrter Reihenfolge wie das Hineinfahren.

Die in der obigen Beschreibung, den Ansprüchen sowie der Zeichnung offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Verfahren zum Herstellen eines Sattels einer Sattelscheibenbremse, insbesondere für Nutzfahrzeuge, wobei der Sattel folgendes aufweist:
einen zuspannseitigen Sattelabschnitt (10) mit mindestens einer Abstützfläche (22.1, 22.2) zum Aufnehmen von Klemmkräften beim Bremsen, einen einstückig mit dem zuspannseitigen Sattelabschnitt ausgeführten felgenseitigen Sattelabschnitt (12) und eine zwischen den beiden Sattelabschnitten liegende erste Ausnehmung (14), in die in eingebautem Zustand mindestens eine Bremsscheibe zumindest abschnittweise hineinragt, **dadurch gekennzeichnet, dass**
zum Ausbilden der Abstützfläche ein Bearbeitungswerkzeug (40) durch die erste Ausnehmung in denjenigen Bereich verbracht wird, in dem die Abstützfläche ausgebildet werden soll, wobei
das Bearbeitungswerkzeug (40) eine L-förmige Halterung (42) aufweist und zum Verfahren in eine Arbeitsstellung translatorisch sowie rotatorisch um eine Achse (48) in Richtung der Längserstreckung eines der Schenkel des "L" und um eine senkrecht auf beiden Schenkeln (44, 46) des "L" stehende Achse bezüglich des Sattels verstellbar ist.

2. Verfahren zum Herstellen eines Sattels einer Sattelscheibenbremse, insbesondere für Nutzfahrzeuge, wobei der Sattel folgendes aufweist:
einen zuspannseitigen Sattelabschnitt (10) mit mindestens einer Abstützfläche (22.1, 22.2) zum Aufnehmen von Klemmkräften beim Bremsen,
einen einstückig mit dem zuspannseitigen Sattelabschnitt ausgeführten felgenseitigen Sattelabschnitt (12) und
eine zwischen den beiden Sattelabschnitten liegende zweite Ausnehmung (16) zum Montieren / Demontieren mindestens eines Bremsbelages,
**dadurch gekennzeichnet, dass**
zum Ausbilden der Abstützfläche ein Bearbeitungswerkzeug (40) durch die zweite Ausnehmung in denjenigen Bereich verbracht wird, in dem die Abstützfläche ausgebildet werden soll.

3. Verfahren nach Anspruch 1 oder 2, **dadurch gekennzeichnet, dass** die Abstützfläche (22.1, 22.2) zumindest abschnittweise eben ist.

4. Verfahren nach einem der vorangehenden Ansprüche, **dadurch gekennzeichnet, dass** die Abstützfläche zumindest abschnittweise die Form einer Rinne hat.

5. Verfahren nach Anspruch 4, **dadurch gekennzeichnet, dass** die Rinne eine bogenförmige, insbesondere eine kreisbogenförmige Kontur hat.

6. Verfahren nach einem der vorangehenden Ansprüche, **dadurch gekennzeichnet, dass** in einem ersten Schritt der Schenkel (44) des "L" mit dem Bearbeitungswerkzeug in die erste oder die zweite Ausnehmung (14, 16) gefahren wird, und zwar mit seiner Längsachse (50) parallel zu der Hauptebene einer in eingebautem Zustand in die erste Ausnehmung hineinragenden Bremsscheibe,
in einem zweiten Schritt die Halterung um eine Achse (48) in Richtung der Längserstreckung des anderen Schenkels (44) des "L" gedreht wird, so dass das Bearbeitungswerkzeug (40) dem zuspannseitigen Sattelabschnitt (10) zugewandt ist,
in einem dritten Schritt das Bearbeitungswerkzeug auf den zuspannseitigen Sattelabschnitt zu bewegt wird und
in einem vierten Schritt die Abstützfläche (22.1, 22.2) ausgebildet wird.

7. Verfahren nach einem der vorangehenden Ansprüche, **dadurch gekennzeichnet, dass** in einem ersten Schritt der Schenkel (44) des "L" mit dem Bearbeitungswerkzeug (40) in die erste oder die zweite Ausnehmung (14, 16) gefahren wird, und zwar mit seiner Längsachse (50) bezüglich der Hauptebene (52) einer in eingebautem Zustand in die erste Ausnehmung hineinragenden Bremsscheibe um einen vorbestimmten Winkel (α) angestellt,
in einem zweiten Schritt das Bearbeitungswerkzeug (40) auf den zuspannseitigen Sattelabschnitt (10) zu bewegt wird,
in einem dritten Schritt das Bearbeitungswerkzeug (40) um die auf beiden Schenkein (44, 46) des "L" senkrecht stehende Achse bezüglich des Sattels verschwenkt wird, so dass der Schenkel des "L" mit dem Bearbeitungswerkzeug mit seiner Längsachse (50) senkrecht zur Hauptebene (52) einer in eingebautem Zustand in die erste Ausnehmung hineinragenden Bremsscheibe steht und
in einem vierten Schritt die Abstützfläche (22.1, 22.2) ausgebildet wird.

8. Verfahren nach Anspruch 7, **dadurch gekennzeichnet, dass** der Anstellwinkel (a) 30° bis 80° beträgt, bevorzugt 40° bis 70°, weiter bevorzugt 50° bis 60°.

9. Verfahren nach einem der vorangehenden Ansprüche, wobei der zuspannseitige Sattelabschnitt mindestens eine Führungsfläche (28, 30, 32, 34, 36, 37, 38, 39) zum Halten und/oder Führen eines Bremsbelages, eines Druckstücks, mindestens einer Druckspindeleinrichtung und/oder mindestens einer Druckstempeleinrichtung in Radial- und/oder Umfangsrichtungen der Bremsscheibe aufweist,
**dadurch gekennzeichnet, dass**
zum Ausbilden der Führungsfläche ein Bearbeitungswerkzeug durch die erste oder die zweite Ausnehmung (14, 16) in denjenigen Bereich verbracht wird, in dem die Führungsfläche ausgebildet werden soll.

## Claims

1. Method for producing a calliper of a calliper disc brake, in particular for commercial vehicles, the calliper having the following:
an application-side calliper section (10) with at least one supporting face (22.1, 22.2) for absorbing clamping forces during braking, a rim-side calliper section (12) which is configured in one piece with the application-side calliper section, and a first recess (14) which lies between the two calliper sections and into which at least one brake disc protrudes at least in sections in the installed state, **characterized in that**,
in order to configure the supporting face, a machining tool (40) is moved through the first recess into that region, in which the supporting face is to be configured, wherein
the machining tool (40) has an L-shaped holder (42) and, for moving into a working position, can be adjusted with regard to the calliper translationally and rotationally about an axis (48) in the direction of the longitudinal extent of one of the limbs of the "L" and about an axis which lies perpendicularly on both limbs (44, 46) of the "L".

2. Method for producing a calliper of a calliper disc brake, in particular for commercial vehicles, the calliper having the following:
an application-side calliper section (10) with at least one supporting face (22.1, 22.2) for absorbing clamping forces during braking,
a rim-side calliper section (12) which is configured in one piece with the application-side calliper section, and
a second recess (16) which lies between the two calliper sections for mounting/dismantling at least one brake lining,
**characterized in that**,
in order to configure the supporting face, a machining tool (40) is moved through the second recess into that region, in which the supporting face is to be configured.

3. Method according to Claim 1 or 2, **characterized in that** the supporting face (22.1, 22.2) is planar at least in sections.

4. Method according to one of the preceding claims, **characterized in that** the supporting face has the shape of a groove at least in sections.

5. Method according to Claim 4, **characterized in that** the groove has an arcuate, in particular a circularly arcuate contour.

6. Method according to one of the preceding claims, **characterized in that**, in a first step, the limb (44) of the "L" is moved with the machining tool into the first or the second recess (14, 16), to be precise with its longitudinal axis (50) parallel to the main plane of a brake disc which protrudes into the first recess in the installed state,
in a second step, the holder is rotated about an axis (48) in the direction of the longitudinal extent of the other limb (44) of the "L", with the result that the machining tool (40) faces the application-side calliper section (10),
in a third step, the machining tool is moved towards the application-side calliper section, and,
in a fourth step, the supporting face (22.1, 22.2) is configured.

7. Method according to one of the preceding claims, **characterized in that**, in a first step, the limb (44) of the "L" is moved with the machining tool (40) into the first or the second recess (14, 16), to be precise with its longitudinal axis (50) set at a predefined angle (α) with regard to the main plane (52) of a brake disc which protrudes into the first recess in the installed state, in a second step, the machining tool (40) is moved towards the application-side calliper section (10),
in a third step, the machining tool (40) is pivoted with regard to the calliper about the axis which lies perpendicularly on both limbs (44, 46) of the "L", with the result that the limb of the "L" lies with the machining tool with its longitudinal axis (50) perpendicular with respect to the main plane (52) of a brake disc which protrudes into the first recess in the installed state, and,
in a fourth step, the supporting face (22.1, 22.2) is configured.

8. Method according to Claim 7, **characterized in that** the angle of attack (a) is from 30° to 80°, preferably from 40° to 70°, further preferably from 50° to 60°.

9. Method according to one of the preceding claims, the application-side calliper section having at least one guide face (28, 30, 32, 34, 36, 37, 38, 39) for holding and/or guiding a brake lining, a pressure piece, at least one pressure spindle device and/or at least one pressure plunger device in the radial and/or circumferential directions of the brake disc,
**characterized in that**,
in order to configure the guide face, a machining tool is moved through the first or the second recess (14, 16) into that region, in which the guide face is to be configured.

## Revendications

1. Procédé de réalisation d'un étrier d'un frein à disque à étrier, en particulier pour des véhicules utilitaires, dans lequel l'étrier présente :
une partie d'étrier (10) du côté d'application du frein, avec au moins une face d'appui (22.1, 22.2) pour absorber des forces de serrage lors du freinage, une partie d'étrier (12) du côté de la jante, réalisée d'un seul tenant avec la partie d'étrier du côté d'application du frein, et un premier évidement (14) situé entre les deux parties d'étrier, dans lequel à l'état monté au moins un disque de frein fait saillie au moins partiellement, **caractérisé en ce que**
pour la réalisation de la face d'appui, on engage un outil d'usinage (40) à travers le premier évidement dans la région, dans laquelle la face d'appui doit être réalisée, dans lequel
l'outil d'usinage (40) présente un support en forme de L (42), et pour le déplacement dans une position de travail, il peut être déplacé par rapport à l'étrier en translation ainsi qu'en rotation autour d'un axe (48) en direction de l'extension longitudinale d'une des branches du « L » et autour d'un axe perpendiculaire aux deux branches (44, 46) du « L ».

2. Procédé de réalisation d'un étrier d'un frein à disque à étrier, en particulier pour des véhicules utilitaires, dans lequel l'étrier présente :
une partie d'étrier (10) du côté d'application du frein, avec au moins une face d'appui (22.1, 22.2) pour absorber des forces de serrage lors du freinage,
une partie d'étrier (12) du côté de la jante, réalisée d'un seul tenant avec la partie d'étrier du côté d'application du frein, et
un deuxième évidement (16) situé entre les deux parties d'étrier, pour le montage/démontage d'au moins une garniture de frein,
**caractérisé en ce que**
pour la réalisation de la face d'appui, on engage un outil d'usinage (40) à travers le deuxième évidement dans la région dans laquelle la face d'appui doit être réalisée.

3. Procédé selon la revendication 1 ou 2, **caractérisé en ce que** la face d'appui (22.1, 22.2) est plane au moins par endroits.

4. Procédé selon l'une quelconque des revendications précédentes, **caractérisé en ce que** la face d'appui présente la forme d'une rigole au moins par endroits.

5. Procédé selon la revendication 4, **caractérisé en ce que** la rigole présente un contour en forme d'arc, en particulier en forme d'arc de cercle.

6. Procédé selon l'une quelconque des revendications précédentes, **caractérisé en ce que** dans une première étape, la branche (44) du « L » avec l'outil d'usinage est déplacée dans le premier ou dans le deuxième évidement (14, 16), notamment avec son axe longitudinal (50) parallèle au plan principal d'un disque de frein faisant saillie à l'état monté dans le premier évidement,
dans une deuxième étape, on fait tourner le support autour d'un axe (48) en direction de l'extension longitudinale de l'autre branche (44) du « L », de telle manière que l'outil d'usinage (40) soit tourné vers la partie d'étrier du côté d'application du frein (10),
dans une troisième étape, l'outil d'usinage est rapproché de la partie d'étrier du côté d'application du frein, et
dans une quatrième étape, la face d'appui (22.1, 22.2) est réalisée.

7. Procédé selon l'une quelconque des revendications précédentes, **caractérisé en ce que** dans une première étape, la branche (44) du « L » avec l'outil d'usinage (40) est déplacée dans le premier ou dans le deuxième évidement (14, 16), notamment avec son axe longitudinal (50) incliné d'un angle prédéterminé (α) par rapport au plan principal (52) d'un disque de frein faisant saillie à l'état monté dans le premier évidement,
dans une deuxième étape, l'outil d'usinage (40) est rapproché de la partie d'étrier du côté d'application du frein (10),
dans une troisième étape, on fait pivoter l'outil d'usinage (40) par rapport à l'étrier autour de l'axe perpendiculaire aux deux branches (44, 46) du « L », de telle manière que la branche du « L » avec l'outil d'usinage soit avec son axe longitudinal (50) perpendiculaire au plan principal (52) d'un disque de frein faisant saillie à l'état monté dans le premier évidement, et
dans une quatrième étape, la face d'appui (22.1, 22.2) est réalisée.

8. Procédé selon la revendication 7, **caractérisé en ce que** l'angle d'inclinaison (a) vaut de 30° à 80°, de préférence de 40° à 70° et de plus grande préférence de 50° à 60°.

9. Procédé selon l'une quelconque des revendications précédentes, dans lequel la partie d'étrier du côté d'application du frein présente au moins une face de guidage (28, 30, 32, 34, 36, 37, 38, 39) pour maintenir et/ou guider une garniture de frein, une pièce de pression, au moins un dispositif de broche de pression et/ou au moins un dispositif de poinçon de pression dans des directions radiale et/ou périphérique du disque de frein,
**caractérisé en ce que**
pour la formation de la face de guidage, l'outil d'usinage est amené à travers le premier ou le deuxième évidement (14, 16) dans la région dans laquelle la face de guidage doit être réalisée.
